# EUROPEAN PATENT APPLICATION

(11) **EP 0 711 816 A2**
(43) Date of publication of application: **15.05.1996**
(21) Application number: 95307747.6
(22) Date of filing: 31.10.1995
(51) Int. Cl.: C09D 179/02, B32B 7/12

(54) **Anti-static laminated film**

(30) Priority: 31.10.1994 JP 267119/94
(71) Applicant: ALTECH COMPANY LIMITED, Tokyo (JP)
(72) Inventor: Hayashi, Kanji, Ota-ku, Tokyo (JP)
(74) Representative: King, James Bertram

(57) **Abstract**

A bonding anchor coating agent for laminated film, the anchor coating being in the form of a layer providing a high anti-static performance on the film surface without prior mixing of an anti-static agent agent into the basic film material. The bonding anchor coating agent comprising a vinyl / acrylic acid ester co-polymer, poly glycidyl ether and polyethylene imine as a cross-linking hardening agent constituent forming a cross-linked polymer layer having an electrostatic inhibiting performance, the laminated film having the said anchor coating agent applied thereto as a layer.

## Description

This invention relates to laminated films particularly films for suppressing or preventing electrostatic charges appearing on the outside surface of laminated plastic films and whereby the electrostatic charge in the vicinity of the film surface is prevented in order to overcome problems where electrostatic charges occur in packaging film, intermediate and transfer films, films for industrial use, building materials and film for recording information.

In prior art an anchor coating agent is used as a material essential for the lamination process and as a means for increasing the bonding strength during the lamination of the film. An anti-static agent needs to be previously mixed in with the plastic film to provide anti-static properties in the laminated film. The anti-static agent mixed into the plastic film bleeds to the film surface over a period of time and prevents static build-up on the plastic film surface. There are however, disadvantages to the bleed of anti-static agent to the film surface such as the deterioration of bonding strength after the lamination and depending on the kind of film raw material, printing difficulty due to the poor adhesion of printing ink and contamination to the packaged product contained in the film.

An object of the present invention is to develop a bonding anchor coating agent which will provide a high anti-static performance on the film surface of a laminated film having the said anchor coating layer without mixing an anti-static agent into the basic material film and without requiring bleed of an anti-static agent through the film.

Broadly and in accordance with this invention it has been found surprisingly that the aforesaid problems can be overcome by using a bonding anchor agent comprising a selected cross-linked reactive polymer.

More specifically and in accordance with this invention there is provided a bonding anchor coating agent for plastic films, preferably laminated plastic films, characterised by the use of polyethylene imine as a constituent of said agent which comprises a cross-linked reactive polymer (macromolecule) having an electrostatic induction preventive property.

In a preferred embodiment the cross-linked reactive polymer comprises the bonding anchor coating agent described and is characterised by:-
(i) a copolymer macromolecule of vinyl monomer and acrylic acid ester monomer having a carboxyl group and quaternary ammonium base side chain,
(ii) a poly glycidyl ether of a divalent to tetravalent aliphatic alcohol, and
(iii) mixed with polyethylene imine having an average molecular weight of from 200 to 70,000 as hardening agent.

Advantageously an anti static laminate film includes an anchor coating layer of the aforesaid anchor coating agent on a plastic film base material.

In an embodiment an anti-static laminated film comprises a plastic film base material layer, an anchor coated layer formed by the aforesaid anchor coating agent, a bonding agent layer and an additional plastic film layer comprising more than one layer.

The anchor coating agent having the electrostatic induction preventive performance of this invention can enhance the bonding strength between the base material film and the bonding agent, significantly increase the hot water resistance, water separation resistance and solvent resistance and can give an excellent anti-static effect on the outer surface of base material film by the electrostatic induction preventive performance.

In a preferred embodiment these effects come from the characteristics of the bonding, water resistance, especially hot water resistance and solvent resistance of the cross-linked macromolecule due to the cross-linking reaction between the carboxylic group of the copolymer side chain and the mixed component of poly-glycidyl ether and polyethylene imine. Further, quaternary ammonium base of this copolymer side chain provides an electrostatic induction preventive performance, and the fast depolarisation behaviour of the anchor coating layer attenuates the interfacial and surface electric charge of a plastic film in contact with this anchor coating layer by the electrification and induction effect and acts as the charge preventive effect on the film surface.

The cross-linked copolymer of this invention can be obtained by co-polymerizing the monomers having each of said functional groups. As an example of each monomer, compounds to be used may be acrylic acid (including metha), acryloxyethyl succinic acid, phthalic acid, and like compounds forming the monomer having the -COOOH terminal group. The quaternary substance (including an anion of halide, sulphate, sulphonate, alkyl sulphonate and the like against the ion) of di-methyl amine ethyl acrylate (including the metha) can be used as the monomer having a quaternary ammonium base. Vinyl derivates such as alkyl acrylate (including the metha), styrene, vinyl acetate and olefin can be used as the polymerized monomer.

The cross-linked hardening agents which may be used in this invention, such as epoxy derivates can be the poly glycidyl ether of divalent and tetravalent aliphatic alcohols, such as glycerine di-glycidyl ether, polyethylene glycol glycidyl ether, polypropylene glycol glycidyl ether of a bifunctional monomer, the tri-methylol propane tri-glycidyl ether of a tri-functional monomer and the tetra glycidyl ether such as the penta erythritol, neo-pentyl, and the like of a tetra-functional monomer.

Advantageously the polyethylene imine to be mixed with the said epoxy derivative for use has an average molecular weight of from 200 to 70,000. The linear polyethylene imine is used but this could be partially branched.

The composition ratio of each monomer of the cross-linked copolymer can be varied widely for use as the anchor coating agent of this invention. Among them, the monomer having the terminal -COOH group may preferably comprise 2 to 23 mol % against all the monomers of the applicable copolymer, and the monomer having quaternary ammonium group may preferably comprise 10 to 40 mol % against all the monomers. The copolymer is structured with the other monomers being 53 to 88 mol %. The mixing ratio of poly glycidyl ether and polyethylene imine of the cross-linked hardening agent shall be in the range of poly glycidyl ether/polyethylene imine = 99/1 to 75/25 in a solid weight ratio, but shall preferably be 95/5 to 90/10. In addition, the compounding ratio between the mixed compound and the copolymer is in the range of copolymer/mixed compound = 90/10 to 60/40 in a solid weight ratio, but may preferably be 85/15 to 70/30. The solvent can be appropriately used for the mixing process, reaction property and viscosity adjustment with respect to constituents of the anchor coating agent of this invention. For example, water, alcohol and the mixture of these liquids can be enumerated but should not be limited to them.

The anchor coating agent of this invention can be applied to resin based film materials. As examples, such compounds can comprise the polyester (PET) of oriented and non-oriented polyethylene phthalate, low density polyethylene (LPDE), linear low density polyethylene (LLDPE), polypropylene (OPP, CPP), polyvinylidene chloride (PVDC) polyvinyl acetate (PVAc), polyvinyl alcohol (PVA). In addition, this coating agent can also be applied to a metal deposited composite film, coloured film, printed film and the like.

After preparing and compounding this anchor coating agent as described above it is then applied to the film base material as a coating. The film is then laminated and bonded with the other basic film materials using the bonding agent as a dry laminate. The bonding separation strength of composite film which has been extrusion-coated by the LDPE shows a performance equal to the conventional type anchor coating agent, and an anti-static performance which is the feature of the anchor coating agent of this invention shows an outstandingly high performance although the film surface has a high surface resistance value characteristic of the film base material. This anti-static performance prevents separation, friction and induction charges and moreover does not produce a friction charge from another plastic film coming into contact with the composite film. Therefore, this invention solves the known problems without using an electro-static charge preventive agent as in conventional laminated films.

The field of application for the laminated films using the anchor coating agent of the invention may be, as example,
1) Packaging material fields: Packaging materials for foodstuffs and chemicals, especially where contamination of the contents by the charge preventive treatment using the surface active agents of the prior-art is considered a problem, and packaging materials where high cleanliness and sterility is demanded.
2) Printing related fields: Electrostatic prevention in printing inks during gravure and off-set printing processes.
3) Information recording material field: Charge prevention in image receiving paper and films and transfer printing.
4. Building materials field: Application of the plastic film to wall materials, especially thermal transfer printing films or the application to vinyl tiles.
5) Adhesive agent separation paper: Application to the silicone release paper field.
6) Application to labelling materials.

A manufacturing method for the anchor coating agent of this invention and an embodiment of a laminated film using the said agent are now described and further explained with reference to examples forming preferred embodiments.

### Example 1 (Anchor coating agent 1 "AC1")

The monomers of MMA/AA/DMAQ are co-polymerized in a weight ratio of 67/3/30 within a solution of isopropanol/water (ratio 2/1), and a clear solution with a solid concentration at 30% and solution viscosity at 1,100 mPa was obtained, wherein:-
- MMA :: Methyl methacrylate
- AA :: Acrylic acid
- DMAQ :: Di-methyl amino ethyl methacrylate 4- chloride.

Further, 20% by weight of di-ethylene glycol diglycidyl ether and 3% by weight of polyethylene imine (average molecular weight = 1200 : manufactured by Nippon Shokubai under registered trade mark 'Epomine SP-012',) were added and mixed as the cross-linked hardening agent with the solution solid matter, and the solution of solid matter concentration to 10% was adjusted by isopropanol. This formed anchor coating agent 1 (AC1).

### Example 2 (Anchor coating agent 2 "AC2")

The monomers of MMA/EA/DMAQ (EA : Ethyl acrylate) were co-polymerized at the percentage of 60/5/5/30 by weight ratio within a mixed solution of isopropanol/water (mixing ratio at 2/1), and a clear solution with solid matter of 29% and solution viscosity at 890 mPa was obtained. Further, 7% by weight of di-ethylene glycol diglycidyl ether, 13% weight of tri-methylole propa tri-glycidyl ether and 2% by weight of polyethylene imine (average molecular weight = 70,000 : manufactured by Nippon Shokubai, under registered trade mark 'Epomine P-1000') were added and mixed as the hardening agent into this solution referenced against the solution solid matter, and moreover the solution of solution solid matter concentration 10% was adjusted by the iso-propanol. This formed the anchor coating agent 2 (AC2).

### Example 3 (Laminated film 1 : PET/AC/bonding agent/CPP)

The agent AC1 was coated to a dry thickness of about 0.2 micron as the anchor coating agent on a polyethylene terephthalate (PET) film and dried for 10 seconds at 90 degrees C. This PET film with liquid coated face and 30 micron non-extended polypropylene (PP) film (CPP) were bonded and laminated to a bonding agent dry thickness of 3 micron (laminating temperature at 60 degrees C, aging conditions : temperature at 38 degrees C for 48 hours) using the bonding agent (DIC-DRYLX-43 + KM-75) for a urethane system dry lamination.

### Example 4 (Laminated film 2 : ONy/AC/bonding agent/CPP)

After the agent AC1 was coated and dried to 15 micron, oriented nylon (ONy) under the same conditions as Example 3 was bonded and laminated with 30 micron CPP film using the bonding agent of Embodiment 3. The bonding and laminating conditions were identical to Example 3.

### Example 5 (Laminated film 3 : OPP/AC/bonding agent/CPP).

After the agent AC 2 was coated and dried to 20 micron oriented PP (OPP) film under the same conditions as Example 3, it was bonded and laminated with 30 micron CPP film using the bonding agent of Example 3. The bonding and laminating conditions were identical to Example 3.

### Example 6 (Laminated film 4 : PRT/AC/bonding agent/OPP).

After the agent AC2 was coated and dried to 12 micron PET film under the same conditions as Example 3, it was bonded and laminated with 20 micron OPP film using the bonding agent of Example 3. The bonding and laminating conditions were identical to Example 3.

### Example 7 (Laminated film 5 : PET/AC/LDPE/LLDPE).

After the agent AC1 was coated and dried onto 12 micron PET film under the same conditions as Example 3, the PET film was laminated and bonded with 40 micron corona treated LLDPE film at the LDPE (resin temperature of around 300 degrees C) using an extrusion heater. The aging conditions are identical to Example 3. The layer thickness of LDPE is about 15 micron.

The laminated film which was bonded and laminated using the conventional commercially available anchor coating agent (ac : manufactured by Nippon Shokubai, under registered trade mark 'Epomine') was used as the comparison examples and its performance was compared with that of the laminated films of said embodiments :
Comparative example 1 (PET/ac/bonding agent/CPP)
Comparative example 2 (ONy/ac/bonding agent/CPP)
Comparative example 3 (OPP/ac/bonding agent/CPP)
Comparative example 4 (PET/ac/bonding agent/CCP)
Comparative example 5 (PET/ac/LDPE/LLDPE)

Each structural film bonding agent and bonding conditions used in the said comparative examples 1 to 5 are identical to the Examples 3 to 7 except for the ac (commercially available anchor coating agent).

The laminated films 1 to 5 of Examples 3 to 7 that were obtained in this way and the laminated films in comparative examples 1 to 5 were evaluated using the following measured values and the results are shown in Table 1.

### (TABLE 1 FOLLOWS)

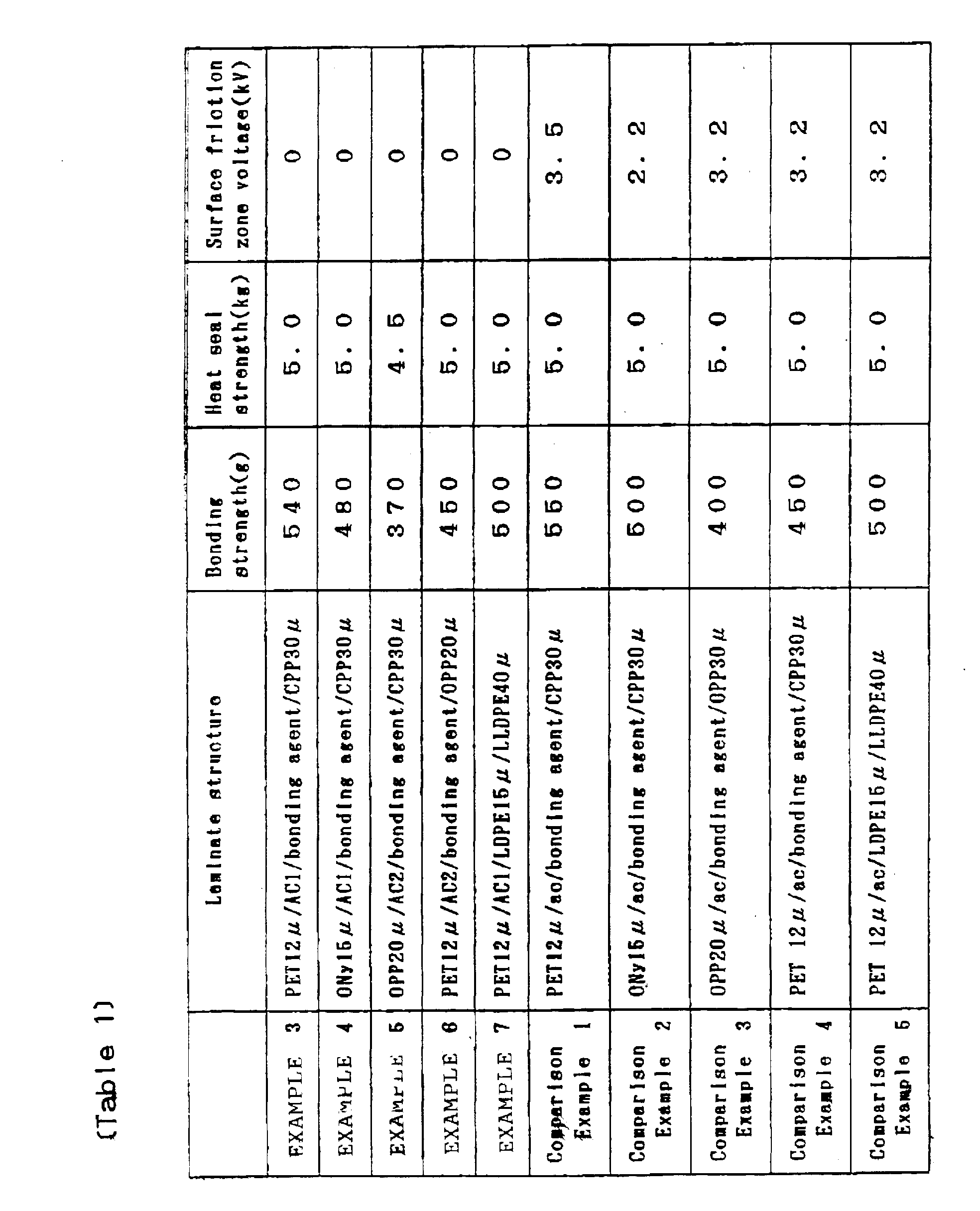

Test Conditions :
a) Comparison of bonding strength : T-type separation 15 mm width, 300 mm/min.
b) Comparison of heat seal strength : T type separation 15 mm width, 00 mm/min. Heat seal conditions : 180 degrees C for 1 second, 2 kg/cm2.
c) Comparison of surface friction zone voltage : The surface friction zone voltage after 30 reciprocating frictions using tissue paper (temperature at 27 degrees C and humidity at 48% RH).

As described above, the present invention yields a high anti-static performance on the film surface while maintaining a high bonding strength and heat seal strength without mixing of anti-static agent into the basic material film itself.

## Claims

1. A bonding anchor coating agent for plastic films, preferably laminated plastic films, characterised by the use of polyethylene imine as a constituent and the agent comprising a cross-linked reactive polymer (macromolecule) having an electrostatic induction preventive property.

2. A bonding anchor coating agent in accordance with Claim 1, characterised by the said cross-linked reactive polymer forming the bonding anchor agent comprising:
(i) a copolymer of vinyl monomer and acrylic ester monomer having a carboxyl group and quaternary ammonium base side chain,
(ii) poly-glycidyl ether of divalent to tetravalent aliphatic alcohol, and
(iii) polyethylene imine having an average molecular weight in the mixed composition substance of from 200 to 70,000.

3. An anti-static laminated film having an anchor coating layer on a plastic film base material, characterised by said layer being formed by the anchor coating agent as claimed in either Claim 1 or 2.

4. An anti-static laminated composite film characterised by an additional plastic film layer, which comprises a plastic film base material layer and an anchor coating agent layer as claimed in either Claim 1 or 2.

5. A bonding anchor coating agent in accordance with any preceding claim, charaterised in that the monomer compounds used are selected from acrylic acid (including metha), acryloxyethyl succinic acid, phthalic acid, and like compounds forming the monomer having the -COOOH terminal group and that the quaternary substance (including an anion of halide, sulphate, sulphonate, alkyl sulphonate and the like against the ion) of di-methyl amine ethyl acrylate (including the metha) are used as the monomer having a quaternary ammonium base.

6. A bonding anchor coating agent in accordance with any preceding claim characterised by the use of vinyl derivates such as alkyl acrylate (including the metha), styrene, vinyl acetate and olefin as the polymerized monomer.

7. A bonding anchor coating agent in accordance with any preceding claim, characterised in that the cross-linking hardening agents used are epoxy derivitives such as the poly glycidyl ether of divalent and tetravalent aliphatic alcohols, such as glycerine di-glycidyl ether, polyethylene glycol glycidyl ether, polypropylene glycol glycidyl ether of a bifunctional monomer, the tri-methylol propane tri-glycidyl ether of a tri-functional monomer and the tetra glycidyl ether such as the penta erythritol, neo-pentyl, and the like of a tetra-functional monomer.

8. A bonding anchor coating agent in accordance with any preceding claim, characterised in that the polyethylene imine has a molecular weight between 200 and 70,000 and is preferably a linear chain more preferably partially branched.

9. A bonding anchor coating agent according to any preceding claim characterised in that the composition ratio of each monomer of the cross-linked copolymer of the anchor coating agent, where the monomer has the terminal -COOH group, is 2 to 23 mol % of the total monomers of the copolymer, and that of the monomer having quaternary ammonium group is 10 to 40 mol % of the total of the monomers.

10. A bonding anchor coating agent in accordance with any preceding claim characterised in that the ratio of poly glycidyl ether and polyethylene imine in the cross-linked hardening agent is in the range of poly glycidyl ether/polyethylene imine = 99/1 to 75/25 in a solid weight ratio, and preferably 95/5 to 90/10.

11. A bonding anchor coating agent in accordance with any preceding claim characterised in that the compounding ratio between the mixed compound and the copolymer is in the range of copolymer/mixed compound = 90/10 to 60/40 in a solid weight ratio, and preferably 85/15 to 70/30.

12. A bonding anchor coating agent according to any preceding claim characterised in that the resin based film materials to which the agent is applied comprise the polyester (PET) of aligned and non-aligned polyethylene phthalate, low density polyethylene (LPDE), linear low density polyethylene (LLDPE), polypropylene (OPP, CPP), polyvinylidene chloride (PVDC) polyvinyl acetate (PVAc), polyvinyl alcohol (PVA), metal deposited composite film, coloured film, and printed film.

13. A bonding anchor coating agent in accordance with any preceding claim characterised in that anchor coating agent is applied to a film base material as a coating and the film is then laminated and bonded with one or more other film materials using the bonding agent as a dry laminate.
